# EUROPÄISCHE PATENTSCHRIFT

(11) **EP 4 177 528 B1**
(45) Veröffentlichungstag und Bekanntmachung des Hinweises auf die Patenterteilung: **10.01.2024**
(21) Anmeldenummer: 21206283.0
(22) Anmeldetag: 03.11.2021
(51) Int. Cl.: F24D 5/00, F24D 7/00, F24H 3/00, F24C 1/00, F24H 9/00, F24B 1/02, F23L 15/04, F23B 80/04, F23L 9/04, F24H 1/00, F24H 1/06, F24H 3/06, F24B 7/02, F24D 12/02, F23J 1/06, F23L 17/00, F24B 1/185, F24B 13/00, F24B 7/04, F23L 1/02

(54) **HEIZVORRICHTUNG MIT VERBESSERTEM WIRKUNGSGRAD**
HEATING DEVICE WITH IMPROVED EFFICIENCY
APPAREIL DE CHAUFFAGE À RENDEMENT AMÉLIORÉ

(43) Veröffentlichungstag der Anmeldung: 10.05.2023
(73) Patentinhaber: Suter Entfeuchtungstechnik AG, 5242 Lupfig (CH)
(72) Erfinder: DZEBA, Gordan, 5606 Dintikon (CH); FLÜCKIGER, Mike, 4333 Münchwilen (CH)
(74) Vertreter: EGLI-EUROPEAN PATENT ATTORNEYS

(56) Entgegenhaltungen:
- EP-A1- 3 438 528
- DE-U1-202015 101 213
- DE-U1-202018 001 770
- US-A- 4 517 903

## Beschreibung

Die vorliegende Erfindung betrifft eine Heizvorrichtung, bevorzugt für die Verbrennung von Biomasseprodukten, insbesondere von Pellets aus Biomasse, mit gesteigertem Wirkungsgrad, ein Verfahren zur Steigerung des Wirkungsgrads von (entsprechenden) Heizvorrichtungen sowie entsprechende Verwendungen.

Aus dem Stand der Technik sind verschiedenste Heizvorrichtungen bekannt. Auch ist es bekannt, Heizvorrichtungen mit Pellets zu betreiben. Die Heizvorrichtungen aus dem Stand der Technik weisen zum Beispiel neben dem Brennraum, in dem der Brennstoff verbrannt wird, auch angrenzend an den Brennraum oder die heisse Abgasleitung Wärmetauscher auf, die wiederum benutzt werden, um Wärme an die zu erwärmende Luft abzugeben, wobei Wasser oder Luft als Wärmeträger genutzt werden.

Als Stand der Technik können beispielsweise angeführt werden: DE 20 2010 016 404 U1 oder DE 20 2018 001 770 U1. Die den nächstliegenden Stand der Technik bildende DE 20 2018 001 770 U1 offenbart dabei ein Heizgerät zum Beheizen von Räumen und zur Erzeugung von Warmwasser, durch Verbrennen von Holz-Pellets, bestehend aus einem Pellet-Behälter, der über eine Fördereinrichtung mit einem Brenner zur thermischen Zersetzung der Holz-Pellets verbunden ist, mit einer Düse zur Verbrennung des Holzgases, angeordnet in einem Brennraum, wobei die heißen Verbrennungsgase vom Brennraum durch mindestens ein Enthitzerrohr mit Wärmeübertrager zu einem Abgas-Sauggebläse geleitet werden.

Bauartbedingt wird bei den Vorrichtungen des Standes der Technik über die Abgase recht viel Wärme ungenutzt in die Umgebung abgegeben. Der Wirkungsgrad dieser Vorrichtungen ist nicht optimal.

Insofern existieren ausgehend von dem bisherigen Stand der Technik noch erhebliche Verbesserungspotentiale.

Aufgabe der vorliegenden Erfindung ist es demgemäss, Heizvorrichtungen zur Verfügung zu stellen, welche im Vergleich zu den Vorrichtungen des Standes der Technik verbesserte Wirkungsgrade aufzeigen.

Gleichsam ist es Aufgabe der vorliegenden Erfindung ein Verfahren zur Verfügung zu stellen, mithilfe dessen eine Wirkungsgradsteigerung von Heizvorrichtungen erreicht werden kann.

Schliesslich sollten Verwendungsmöglichkeiten für wirkungsgradgesteigerte Heizvorrichtungen gefunden werden.

Weitere Aufgabenstellungen ergeben sich aus der nachfolgenden Beschreibung.

Gelöst werden diese und andere Aufgaben im Rahmen der vorliegenden Erfindung durch die Gegenstände der unabhängigen Ansprüche.

Bevorzugte Ausgestaltungen ergeben sich aus den abhängigen Ansprüchen sowie der nachfolgenden Beschreibung.

Im Rahmen der vorliegenden Erfindung sind Temperaturangaben, soweit nicht anders angegeben, in Grad Celsius (°C).

Sofern nichts Anderes angegeben wird, wird die Verbrennung bei Umgebungsdruck (=Normaldruck/Atmosphärendruck), d.h. bei 1013 mbar, durchgeführt.

Im Rahmen der vorliegenden Erfindung schliesst der Begriff «umfassen» jeweils auch «bestehend aus» ein; das heisst eine entsprechende Liste kann neben den explizit genannten Elementen auch weitere Elemente enthalten (= umfassen), oder sie kann genau diese Elemente enthalten (=bestehen aus) (wobei unwesentliche Elemente wie Schrauben, Markierungen etc nicht berücksichtig sind).

Bei relativen Angaben wie oben, unten, links, rechts oder Ähnlichem wird im Rahmen der vorliegenden Erfindung als Bezugssystem von einem aufrecht auf dem Erdboden vor dem diskutierten Objekt stehenden Beobachter ausgegangen.

Gegenstand der vorliegenden Erfindung ist insbesondere eine Heizvorrichtung umfassend:
A) einen Brennerteil umfassend
   - eine Brennkammer,
   - eine doppelwandige, innen hohle Brennkammerwand, die eine obere Öffnung hat, die oberhalb der Brennzone in die Brennkammer mündet,
   - einen Rauchgaskanal, der das Rauchgas entlang der Brennkammer nach unten führt,
   - an den Rauchgaskanal anschliessend einen Wärmetauscherbereich umfassend
      - zuerst einen Flachrohrrauchgaswärmetauscher,
      - dann einen Tertiärluftwärmetauscher,
   - einen Rauchgasabluftkamin,
   - einen oberhalb der Brennkammer angeordneten Abstrahlungswärmetauscher,
   - eine Rauchgasklappe am oberen Ende des Rauchgaskanals, die in geöffnetem Zustand den Rauchgaskanal mit dem Kamin verbindet,
B) einen Heizteil umfassend
   - ein Luftansauggebläse,
   - einen Abluftwärmetauscher mit demselben Wärmeträger wie der Flachrohrrauchgaswärmetauscher,
   - einer Auslassöffnung für die erwärmte Luft,
wobei der Flachrohrrauchgaswärmetauscher mit dem Abluftwärmetauscher einen Wärmetauscherkreislauf bildet.

In bevorzugten Ausführungsformen der vorliegenden Erfindung umfasst die Brennkammer Einlasskanäle oder Einlassöffnungen für Primärluft und Sekundärluft, ein Brennrost und einen Brenner, eine Zuführöffnung für Brennstoff und eine Brennstoffabfallsammelkammer und/oder eine Brennstoffabfallabführvorrichtung, bevorzugt einen Kanal, insbesondere durch eine Förderschnecke zum Abtransport des Brennstoffabfalls mit der Brennkammer verbunden. Weiterhin kann in Varianten vorgesehen sein, ein Kontrollfenster vorzusehen, mit dem die Verbrennung in der Brennkammer visuell überprüft werden kann. Es ist aber auch möglich und in Varianten der Erfindung bevorzugt, die Verbrennung mittels elektronischer Überwachung, beispielsweise Thermosensoren und Kameras (automatisch) zu überwachen.

In einigen bevorzugten Varianten der vorliegenden Erfindung ist der Primärlufteinlass in die Brennkammer das Ende eines Luftansaugkanals, der an der Brennkammerwand entlanggeführt wird. Dies bewirkt, dass im laufenden Betrieb die Primärluft bereits vorgewärmt (durch Wärme, die über die Brennkammerwand abgestrahlt wird) in das System eintritt; zusätzlich wird durch die Brennkammerwand abgestrahlte Hitze sinnvoll genutzt und nicht ungenutzt abgegeben. Gleichsam kann auch die Sekundärluft durch einen entsprechenden Kanal vorgewärmt werden.

Die Zündung der Verbrennung kann auf beliebige fachüblich Art und Weise erfolgen, zum Beispiel kann eine Gasflamme zur Entzündung verwendet werden. Diese kann in Form eines kleinen Gasbrenners Teil der Vorrichtung sein. Oder es kann ein keramisches Zündelement, als Teil der Vorrichtung, mittels Luftstrom zur Entzündung genutzt werden.

In bevorzugten Ausführungsformen der vorliegenden Erfindung umfasst die Heizvorrichtung einen (Pellet-)Vorratsbehälter, der mit der Brennkammer über die Zuführöffnung für Brennstoff verbunden ist, bevorzugt über eine Förderschnecke, umfasst.

In bevorzugten Ausführungsformen der vorliegenden Erfindung mündet die obere Öffnung der doppelwandigen, innen hohlen Brennkammerwand oberhalb von Brennzone und Nachbrennzone in die Brennkammer. Zusätzlich kann die doppelwandige, innen hohle Brennkammerwand in bevorzugten Varianten der vorliegenden Erfindung eine untere Öffnung oder einen Anschluss, konfiguriert Tertiärluft eingeleitet zu bekommen, aufweisen. Dadurch wird erreicht, dass die schon durch den Tertiärluftwärmetauscher vorgewärmte Luft durch die Wand (der Brennkammer) hindurch in der doppelwandigen, innen hohlen Brennkammerwand weiter erwärmt wird und in quasi doppelt vorgewärmten Zustand oberhalb der Brennzone in die Brennkammer eingeleitet und mit dem Rauchgas vermischt wird. Daraus ergeben sich mehrere vorteilhafte Effekte: zum Einen wird das Rauchgas verdünnt, so dass die später aus dem Kamin austretenden Abgase eine geringere Schadstoffkonzentration aufweisen. Zum Anderen wird erreicht, dass mittels der Tertiärluft Energie «abgefangen» wird, die sonst ungenutzt, zum Einen direkt nach dem Wärmetauscherbereich und zum Anderen durch die Brennkammerwand hindurch, aus dem System entweichen würde.

In bevorzugten Ausführungsformen der vorliegenden Erfindung ist der Rauchgaskanal im Bezug zu der doppelwandigen, innen hohlen Brennkammerwand auf der anderen Seite der Brennkammer angeordnet, und das Rauchgas wird entlang der an der Brennkammer befindlichen Wand des Rauchgaskanals nach unten führt. Es wird also eine Art Gegenstrom-Prinzip angewendet, wodurch die Rauchgase durch die aufgeheizte Wand (der Brennkammer) weiter erwärmt werden. Dies bewirkt zusammen mit der Tertiärluft-Nutzung auch, dass die durch die Brennkammerwand strahlende Wärmeenergie genutzt wird und nicht ungenutzt das System verlässt.

In weiteren bevorzugten Ausführungsformen der vorliegenden Erfindung können die Brennkammerseitenwände, abgesehen von den Einlässen für Primär- und Sekundärluft sowie Brennstoffzufuhr und gegebenenfalls die Brennstoffabfuhr, vollständig von Rauchgaskanal und doppelwandiger, innen hohler Brennkammerwand umschlossen sein, beispielsweise etwa je zur Hälfte, oder im Verhältnis 1:2, oder 1:3, oder 1:4 oder beliebigen anderen Verhältnissen von Rauchgaskanal zu doppelwandiger, innen hohler Brennkammerwand, jeweils bezogen auf den Anteil am Umfang der jeweils abgedeckten Brennkammerwand. Dies kann das «Abfangen» von durch die Brennkammerseitenwände abgestrahlter Energie optimieren. Selbstverständlich ist es auch möglich, in diesem Falle weitere Aussparungen für zum Beispiel Sicht- und/oder Kontrollfenster vorzusehen.

In bevorzugten Ausführungsformen der vorliegenden Erfindung ist der Wärmetauscherbereich in Strömungsrichtung des Rauchgases jenseits des Rauchgaskanals angeordnet. Dabei wird der Flachrohrrauchgaswärmetauscher mit Thermalöl als Wärmeträger betrieben. Das Thermalöl wird bevorzugt ausgewählt aus Mineralölen, Synthetikölen oder Silikonölen, besonders bevorzugt wird im Rahmen der vorliegenden Erfindung Silikonöl eingesetzt. Der Tertiärluftwärmetauscher weist dabei Einlasskanäle oder Einlassöffnungen für Tertiärluft und Ableitungen, die mit der doppelwandigen, innen hohlen Brennkammerwand verbunden sind, für die erwärmte Tertiärluft auf. Der Tertiärluftwärmetauscher zieht dabei Luft von aussen an, die dann durch das Rauchgas erwärmt wird. Die so erwärmte Luft wird dann zu der doppelwandigen, innen hohlen Brennkammerwand geleitet, durch diese unter weiterer Erwärmung hindurch und schliesslich oberhalb der Brennzone in die Brennkammer. Die doppelwandige Brennkammerwand ist bevorzugt mit innenliegenden Prallblechen, die jeweils einen Teil des Strömungsweges blockieren und den Luftstrom mithin umlenken, ausgestaltet, so dass sich ein Luftstrom ergibt, der das Innere der doppelwandige Brennkammerwand mäanderartig bzw. geschlängelt durchströmt. Dies bewirkt, dass der Tertiärluftstrom quasi vollständig an der (heissen) Brennkammerwand entlangströmt und mithin eine möglichst effektive Wärmeübertragung auf die Tertiärluft erfolgt.

In bevorzugten Ausführungsformen der vorliegenden Erfindung schliesst anschliessend an den Wärmetauscherbereich ein Bereich mit Saug-Zuggebläse an; in Varianten kann ein Saug-Zuggebläse aber auch im oder am Rauchgasabluftkamin angeordnet sein, gegebenenfalls auch zusätzlich. Diese Gebläse haben den Sinn in dem Brennerteil einen Unterdruck zu erzeugen, so dass einerseits Luft (Primär-, Sekundär- und Tertiärluft) durch die Vorrichtung gesaugt wird, und andererseits keine Rauchgase durch eventuelle Undichtigkeiten austreten.

In bevorzugten Ausführungsformen der vorliegenden Erfindung umfasst das Heizteil ein Luftansaugteil, bevorzugt in Form von mindestens einem Luftkanal, das Luft von oberhalb des Abstrahlungswärmetauschers oder durch den Abstrahlungswärmetauscher ansaugt.

In bevorzugten Ausführungsformen der vorliegenden Erfindung ist das Luftansauggebläse des Heizteils so konfiguriert bzw. so umbaut, dass es zumindest zum Teil, bevorzugt zum Teil, besonders bevorzugt 40 bis 60%, insbesondere 50%, Luft aus dem Luftansaugteil ansaugt und ansonsten Luft aus der Umgebung ansaugt, wobei sich die Prozente auf die Gesamt-Volumenmenge angesaugter Luft beziehen.

In bevorzugten Ausführungsformen der vorliegenden Erfindung sind die beiden Teile A) und B) (Brennerteil und Heizteil) durch die Verrohrung des Flachrohrrauchgaswärmetauschers mit dem Abluftwärmetauscher, und gegebenenfalls durch die Verbindung der Luftansaugung des Heizteils zu dem Abstrahlungswärmetauscher, verbunden und ansonsten physikalisch getrennte Einheiten. Allerdings ist es im Rahmen der vorliegenden Erfindung ebenfalls möglich, und demgemäss in Varianten bevorzugt, die beiden Teil fest miteinander zu verbinden (durch Verschrauben, Verschweissen, Vernieten etc.).

Eine besonders bevorzugte Heizvorrichtung gemäss vorliegender Erfindung, bevorzugt für die Verbrennung von Biomasse, insbesondere von Pellets aus Biomasse, umfasst oder besteht demnach aus:
A) einem Brennerteil umfassend
   - eine Brennkammer umfassend
      - Einlasskanäle oder Einlassöffnungen für Primärluft und Sekundärluft,
      - ein Brennrost und einen Brenner
      - eine Zuführöffnung für Brennstoff,
      - eine Brennstoffabfallsammelkammer und/oder eine Brennstoffabfallabführvorrichtung, bevorzugt einen Kanal, insbesondere durch eine Förderschnecke zum Abtransport des Brennstoffabfalls mit der Brennkammer verbunden,
   - einen (Pellet-)Vorratsbehälter, der mit der Brennkammer über die Zuführöffnung für Brennstoff verbunden ist, bevorzugt über eine Förderschnecke,
   - eine doppelwandige, innen hohle Brennkammerwand, die eine obere Öffnung hat, die oberhalb der Brennzone, bevorzugt oberhalb von Brennzone und Nachbrennzone, in die Brennkammer mündet, und eine untere Öffnung oder Anschluss, konfiguriert Tertiärluft eingeleitet zu bekommen, aufweist,
   - einen Rauchgaskanal, der im Bezug zu der doppelwandigen, innen hohlen Brennkammerwand auf der anderen Seite der Brennkammer angeordnet ist, und das Rauchgas von oben herab entlang seiner an die Brennkammer grenzenden Wand nach unten führt,
   - an den Rauchgaskanal anschliessend, aus Blickrichtung der Brennkammer jenseits des Rauchgaskanals angeordnet, einen Wärmetauscherbereich umfassend
      - zuerst einen Flachrohrrauchgaswärmetauscher, bevorzugt mit Thermalöl als Wärmeträger,
      - dann einen Tertiärluftwärmetauscher umfassend Einlasskanäle oder Einlassöffnungen für Tertiärluft und Ableitungen für die erwärmte Tertiärluft, die mit der doppelwandigen, innen hohlen Brennkammerwand verbunden sind,
   - optional anschliessend an den Wärmetauscherbereich einen Bereich mit Saug-Zuggebläse,
   - einen Rauchgasabluftkamin,
   - einen oberhalb der Brennkammer angeordneten Abstrahlungswärmetauscher,
   - eine Rauchgasklappe am oberen Ende des Rauchgaskanals, die in geöffnetem Zustand den Rauchgaskanal mit dem Kamin verbindet,
B) einem Heizteil umfassend
   - ein Luftansaugteil, das Luft von oberhalb des Abstrahlungswärmetauscher oder durch den Abstrahlungswärmetauscher ansaugt,
   - ein Luftansauggebläse, das zumindest zum Teil, bevorzugt zum Teil, besonders bevorzugt 40 bis 60%, insbesondere 50%, Luft aus dem Luftansaugteil ansaugt und ansonsten Luft aus der Umgebung ansaugt, wobei sich die Prozente auf die Gesamtmenge angesaugter Luft beziehen,
   - einen Abluftwärmetauscher mit demselben Wärmeträger wie der Flachrohrrauchgaswärmetauscher, bevorzugt Thermalöl,
   - einer Auslassöffnung für die erwärmte Luft,
wobei der Flachrohrrauchgaswärmetauscher mit dem Abluftwärmetauscher einen Wärmetauscherkreislauf bildet, und die beiden Teile A) und B) durch die Verrohrung des Flachrohrrauchgaswärmetauschers mit dem Abluftwärmetauscher, und gegebenenfalls durch die Verbindung der Luftansaugung des Heizteils zu dem Abstrahlungswärmetauscher, verbunden sind und ansonsten physikalisch getrennte Einheiten sind.

Die Tatsache, dass Heizteil und Brennerteil eigenständige Einheiten sind, ermöglicht eine flexible Handhabung. So kann bei Defekt eines Teils schnell dieses Teil ausgetauscht werden, ohne dass die ganze Heizvorrichtung getauscht werden müsste. Weiterhin ist es damit möglich, einzelne Teile zu tauschen, um dies an die Gegebenheiten anzupassen, also zum Beispiel grössere oder kleinere Einheiten aufzustellen. Gleichwohl werden Heizteil und Brennerteil gewöhnlich gemeinsam als eine Heizvorrichtung genutzt/transportiert/aufgestellt werden, insbesondere dann, wenn diese als mobile Variante ausgestaltet ist (wofür dann ein Rahmen oder Stützrahmen, was ein PKW-Anhängerrahmen sein kann, vorgesehen sein kann).

Im Rahmen der vorliegenden Erfindung kann die Auslassöffnung für erwärmte Luft in entsprechenden Weiterbildungen mit einem Schlauch versehen werden, um die austretende erwärmte Luft besser an den gewollten Zielort dirigieren/leiten zu können.

Gegenstand der vorliegenden Erfindung ist ferner ein Verfahren zur Steigerung des Wirkungsgrads einer Heizvorrichtung durch
- befeuern einer Verbrennung in einer Brennkammer, wie im Rahmen dieser Erfindung beschrieben, unter Zuführung von Primärluft durch die Brennzone und Zufuhr von Sekundärluft am oberen Ende der Brennzone,
- leiten des Rauchgases über zunächst einen Flachrohrrauchgaswärmetauscher und dann über einen Tertiärluftwärmetauscher,
- leiten der so erwärmten Tertiärluft in eine doppelwandige, innen hohle Brennkammerwand zur weiteren Erwärmung,
- einleiten der erwärmten Tertiärluft aus der doppelwandigen, innen hohlen Brennkammerwand in die Brennkammer oberhalb der Brennzone, bevorzugt oberhalb von Brennzone und Nachbrennzone, und Vermischung mit dem Rauchgas,
- übertragen von Wärme auf zumindest einen Teil der zu erwärmenden Luft, durch einen oberhalb der Brennkammer angeordneten Wärmetauscher,
- übertragen von weiterer Wärme auf die zu erwärmende Luft durch einen Abluftwärmetauscher mittels im Flachrohrrauchgaswärmetauscher und/oder Lamellenwärmetauscher erwärmten Wärmeträger, bevorzugt Thermalöl, insbesondere Silikonöl.

Ein weiterer Gegenstand der vorliegenden Erfindung ist ein Brennerteil für Heizvorrichtungen, wie im Übrigen in dieser Anmeldung beschrieben. Die Verrohrung des zur Wärmeübertragung an ein Heizteil gedachten Wärmetauschers ist dabei nur optional; sie kann vorinstalliert sein, muss es aber nicht. Wesentlich für diesen Gegenstand der vorliegenden Erfindung ist die Luft und Gasführung in Zusammenhang mit den installierten Wärmetauschern des Brennerteils.

Bevorzugt ist demgemäss ein Brennerteil, bevorzugt für eine Heizvorrichtung, umfassend
- eine Brennkammer umfassend Einlasskanäle oder Einlassöffnungen für Primärluft und Sekundärluft, ein Brennrost und einen Brenner, eine Zuführöffnung für Brennstoff, eine Brennstoffabfallsammelkammer und/oder eine Brennstoffabfallabführvorrichtung,
- einen (Pellet-)Vorratsbehälter, der mit der Brennkammer über die Zuführöffnung für Brennstoff verbunden ist, bevorzugt über eine Förderschnecke,
- eine doppelwandige, innen hohle Brennkammerwand, die eine obere Öffnung hat, die oberhalb der Brennzone, bevorzugt oberhalb von Brennzone und Nachbrennzone, in die Brennkammer mündet, und eine untere Öffnung, konfiguriert Tertiärluft eingeleitet zu bekommen,
- einen Rauchgaskanal, der im Bezug zu der doppelwandigen, innen hohlen Brennkammerwand auf der anderen Seite der Brennkammer angeordnet ist, und das Rauchgas von oben herab entlang seiner an die Brennkammer grenzenden Wand nach unten führt,
- an den Rauchgaskanal anschliessend, in Strömungsrichtung des Rauchgases jenseits des Rauchgaskanals angeordnet, einen Wärmetauscherbereich umfassend zuerst einen Flachrohrrauchgaswärmetauscher, bevorzugt mit Thermalöl als Wärmeträger, dann einen Tertiärluftwärmetauscher umfassend Einlasskanäle oder Einlassöffnungen für Tertiärluft und Ableitungen für die erwärmte Tertiärluft, die mit der doppelwandigen, innen hohlen Brennkammerwand verbunden sind,
- optional anschliessend an den Wärmetauscherbereich einen Bereich mit Saug-Zuggebläse,
- einen Rauchgasabluftkamin,
- einen oberhalb der Brennkammer angeordneten Abstrahlungswärmetauscher,
- eine Rauchgasklappe am oberen Ende des Rauchgaskanals, die in geöffnetem Zustand den Rauchgaskanal mit dem Kamin verbindet.

Weiterer Gegenstand der vorliegenden Erfindung ist die Verwendung der erfindungsgemässen Heizvorrichtung zur Erwärmung von zu erwärmenden Bereichen, insbesondere (teilweise) abgetrennten Bereichen, insbesondere Räumen. Zu den Räumen zählen im Rahmen der vorliegenden Erfindung neben Zimmern auch Zelte, Jahrmarktbuden oder ähnliches.

Zudem ist noch Gegenstand der vorliegenden Erfindung die Verwendung des erfindungsgemässen Verfahrens zur Erhöhung der Effizienz von Heizvorrichtungen. Ausserdem ist Gegenstand der vorliegenden Erfindung die Verwendung des erfindungsgemäss Brennerteils zur Verbrennung von Brennstoffen, bevorzugt aus Biomasse, insbesondere Holzpellets, oder zur Erwärmung von zu erwärmenden Bereichen, optional zusammen mit einem Heizteil, insbesondere einem Heizteil wie im Übrigen in dieser Anmeldung beschreiben.

Weitere bevorzugte Ausgestaltungen finden sich im Folgenden.

Die Heizvorrichtung der vorliegenden Erfindung kann sowohl als stationäre Einheit ausgestaltet sein, als auch als mobile Einheit. In einigen bevorzugten Varianten ist sie als mobile Einheit ausgestaltet. In diesem Fall können unter die Heizvorrichtung Rollen oder Rädern montiert sein. In weiteren Varianten kann die Heizvorrichtung auf einem handelsüblichen PKW-Anhänger montiert oder angeordnet sein. In weiteren Varianten kann sie als Vorrichtung auf Rädern mit Anhängerkupplung ausgestaltet sein, also selbst einen Anhänger darstellen.

Die Heizvorrichtung der vorliegenden Erfindung ist nicht auf eine bestimmte Grösse festgelegt. Für einen möglichst flexiblen und ökonomischen Einsatz sind jedoch Grössen vorteilhaft, die handelsüblichen PKW-Anhängern entsprechen bzw. auf diese passen. Insofern sind die Vorrichtungen der vorliegenden Erfindung in bevorzugten Ausführungsformen ca. 1 bis 3 m lang, 1,5 bis 2,5 m breit und 1,5 bis 2,5 m hoch. Sofern die erfindungsgemässen Heizvorrichtungen (bzw. das erfindungsgemässe Brennerteil) Räder oder Rollen aufweisen oder auf einen PKW-Anhänger verladbar sind, kann die Vorrichtung als mobile Heizvorrichtung bezeichnet werden.

In Varianten bevorzugt ist es, wenn die erfindungsgemässe Heizvorrichtung (oder das erfindungsgemässe Brennerteil) elektronisch geregelt und/oder gesteuert wird. Dazu sind entsprechende Sensoren und mindestens eine Steuereinheit an der Vorrichtung angeordnet. Entsprechend weist die Steuereinheit eine Bedieneinheit auf, mit der diese von einem Nutzer bedient werden kann.

Wahlweise ist es auch möglich, eine Steuereinheit an der Vorrichtung anzuordnen, die aus der Ferne bedient werden und mithin aus der Ferne die Vorrichtung gesteuert werden kann (wenn es zum Beispiel zu warm in dem beheizten Bereich wird, kann die Leistung der Vorrichtung heruntergeregelt werden). Eine solche Steuerung aus der Ferne kann über W-LAN, Bluetooth (oder anderen Funk) oder ähnliches erfolgen, zum Beispiel auch mittels einer (Smartphone-) App.

Die erfindungsgemässe Steuerung wird bevorzugt so betrieben, dass beim Aufheizen bzw. Anfahren des Brennvorgangs und beim laufenden Betrieb optimale Luftzufuhr und Rauchgasabfuhr gewährleistet ist, insbesondere durch regeln der Stärke des Saug-Zuggebläses im Brennerteil sowie gegebenenfalls öffnen und schliessen von Drosselklappen in den Primär-, Sekundär- und Tertiärluftkanälen bzw. -einlässen. Zusätzlich wird das Luftansauggebläse des Heizteils in Varianten so geregelt, dass ein optimales Luftstrom/Wärmeaufnahme-Verhältnis erzielt wird. Es ist bevorzugt, beim Aufheizen bzw. Anfahren noch keine Tertiärluft zuzuführen. Diese würde zum Beispiel zunächst den Rauchgasstrom kühlen und entsprechend würde der Kamineffekt verringert (so dass mehr Leistung für das Gebläse nötig wäre).

Im Verlauf des Brennvorgangs (also nach dem Aufheizen/Anfahren) reicht die Sogwirkung der in der doppelwandigen, innen hohlen Brennkammerwand aufsteigenden Luft (aufgrund dessen, dass sie erwärmt wird), um die benötigte Menge Tertiärluft in das System zu bringen. Es ist aber im Rahmen der Erfindung ebenfalls möglich, hilfsweise ein Gebläse im Tertiärluftsystem zu arrangieren. Ähnlich reichen meist auch für Primär- bzw. Sekundärluft die Öffnungen/Einlässe zur Luftversorgung; allerdings kann auch hierbei jeweils ein Gebläse angeordnet werden, um den jeweiligen Luftstrom zu unterstützen (beispielsweise um die Verbrennung «anzufachen»).

Ferner wird bevorzugt die Position der Rauchgasklappe in Abhängigkeit von der Temperatur im Brennerteil geregelt. Es ist zwar möglich, dies über mechanische Vorrichtungen, wie Schmelzsicherungen oder ähnliches umzusetzen, jedoch ist dies in dem Sinne weniger bevorzugt, als dass solche Sicherungen nach Einsatz getauscht werden müssen. Insofern wird die Rauchgasklappe bevorzugt elektronisch geregelt.

Der Flachrohrauchgaswärmetauscher bewirkt aufgrund seiner Struktur, dass ihn das Gas relativ langsam durchströmt (bzw. die Flachrohrlamellen umströmt) und dadurch viel Zeit hat um effektiv Wärme auf den Wärmeträger, insbesondere Thermalöl, zu übertragen.

Die Steuerung der Brennstoffzufuhr erfolgt in bevorzugten Varianten der vorliegenden Erfindung über die Drehgeschwindigkeit der Förderschnecke vom (Pellet-)Vorratsbehälter zur Brennkammer. Damit lässt sich effektiv einstellen, dass einerseits nicht zu viel Brennstoff zugeführt wird, wodurch es zu heiss werden könnte, und andererseits auch, dass nicht zu wenig Brennstoff zugeführt wird, so dass die Verbrennung nicht stoppt, oder zu wenig Wärme generiert wird.

Eine bevorzugte Variante der vorliegenden Erfindung besteht demgemäss darin, die ganze Vorrichtung elektronisch zu regeln, also ganz besonderes bevorzugt Luftzufuhr, Brennstoffzufuhr, Brennstoffrestmengenüberwachung, Temperatur (in der Brennkammer), Gebläseleistungen, Pumpenleistungen für den Flachrohrrauchgaswärmetauscher/Abluftwärmetauscher-Wärmetauscherkreislauf, Rauchgasklappe, eventuelle Notfallabschaltungsbedingungen über Sensoren zu erfassen und entsprechend elektronisch (nach-)zu regeln.

Im Rahmen der vorliegenden Erfindung wurde überraschend gefunden, dass ein sehr hoher Wirkungsgrad durch die erfindungsgemässe Heizvorrichtung, das erfindungsgemässe Brennerteil bzw. das erfindungsgemässe Verfahren erzielbar ist. Dies wird erfindungsgemäss dadurch erreicht, dass die Gesamtheit der konstruktiven Massnahmen eine sehr hohe Ausnutzung der durch die Verbrennung anfallenden Wärme erreicht wird, die deutlich über das hinausgeht, was bisher im Stand der Technik erzielt wurde. Im Rahmen der vorliegenden Erfindung wird die Wärme an das Heizteil direkt über zwei Wärmetauscher (Flachrohrauchgaswärmetauscher und Abstrahlungswärmetauscher) übertragen. Zusätzlich wird innerhalb des Brennerteils ein höchst effektives Energiemanagement betrieben, dahingehend, dass die in der Brennkammer generierte Wärme, nicht nur einfach durch die Rauchgase übertragen wird, sondern es werden die Rauchgase zusätzlich aufgewärmt durch die Entlangführung des Rauchgaskanals an der Brennkammerwand und dadurch, dass bereits erwärmte Tertiärluft mit dem Rauchgas vermischt wird. Zusätzlich wird durch die «Umhüllung» der Brennkammer mit Rauchgaskanal, doppelwandiger, innen hohler Brennkammerwand, sowie gegebenenfalls Primär- und Sekundärluftzufuhrkanälen, eine effektive Nutzung der durch die Brennkammerwände abgestrahlte Wärme erreicht, die somit nicht ungenutzt in die Umgebung abgegeben wird, bzw. eine zusätzliche komplizierte und teure Isolierung der Brennkammer überflüssig macht. Insgesamt wird bei der vorliegenden Erfindung also die durch die Verbrennung freigesetzte Energie an möglichst vielen Stellen möglichst effektiv aufgefangen bzw. umgewandelt

Die Funktionsweise der erfindungsgemässen Heizvorrichtung lässt sich kurz auch wie folgt beschreiben:
In der Brennkammer werden Brennstoffe, bevorzugt basierend auf Biomasse, insbesondere (Holz-)Pellets, welche mittels Fördereinrichtung, insbesondere Förderschnecke, in die Brennkammer geschoben werden, entzündet. Die Verbrennung erhält Luft aus dem Primär- wie auch Sekundärluftkanal. Dadurch werden die Rauchgase erzeugt. Durch das Saug-Zuggebläse wird ein Unterdruck erzeugt. Damit werden die Rauchgase mit der Tertiärluft vermischt (diese wird durch den Unterdruck von aussen durch den Tertiärluftwärmetauscher, die Verbindung zur doppelwandigen, innen hohlen Brennkammerwand und dann durch diese gesaugt). Diese angesprochene Tertiärluft wird dabei über zwei Stufen erwärmt. Die erste Stufe ist der Tertiärluftwärmetauscher, bei diesem wird die Restrauchgastemperatur genützt. Mit der zweiten Stufe wird die bereits vorgewärmte Luft über einen Kanal, welcher eine stufenlose Drosselklappe besitzt, in die doppelwandige, innen hohle Brennkammerwand geführt und dadurch über die Abstrahlungswärme weiter erwärmt. Die mit der Tertiärluft vermischten Rauchgase werden durch den Seitenkanal zum Flachrohrrauchgaswärmetauscher und Tertiärluftwärmetauscher gezogen. Anschliessend werden diese durch den Kamin in die Atmosphäre ausgestossen. Mit den Rauchgasen, welche durch den Flachrohrrauchgaswärmetauscher strömen, wird das Thermalöl erwärmt. Dieses wiederum wird mit einer Pumpe dann durch den Abluftwärmetauscher im Heizteil befördert. Die nutzbare Abluftwärme im Heizteil wird durch zwei Stufen erzeugt. Zum Einen wird ein Teil der Ansaugluft für das Abluftmodul durch den Abstrahlungswärmetauscher vorgewärmt. Und zum Anderen wird die Abluft über den Abluftwärmetauscher erwärmt.

Der (Pellet-)Vorratsbehälter ist im Rahmen der vorliegenden Erfindung mit der Brennkammer bevorzugt so verbunden, dass (regelbar) Brenngut bzw. Brennstoff (diese beiden Begriffe werden in der vorliegenden Erfindung synonym verwendet) in die Brennkammer geleitet wird. Bevorzugt erfolgt dies über eine Förderschnecke, was verschiedene Vorteile hat, unter anderem gute Regelbarkeit (der Menge) und geringes Risiko eines Rückbrandes. Der (Pellet-)Vorratsbehälter ist in der Regel ein grosses Gefäss, in welches der Brennstoff eingefüllt wird und durch Schwerkraft zum unteren Ende des Behälters gelangt; insofern ist der Behälter bevorzugt mindestens zum Teil nach unten hin abgeschrägt ausgestaltet. An diesem unteren Ende ist dann in bevorzugten Ausgestaltungen eine Förderschnecke angeordnet, die den Brennstoff (geregelt) in die Brennkammer fördert.

Darüber hinaus kann in oder an dem (Pellet-)Vorratsbehälter eine Überwachungseinrichtung für den Füllstand angeordnet sein. Dies kann im Prinzip jede dafür geeignete Vorrichtung sein, bevorzugt wird aber eine Ultraschal- oder Radarsonde, insbesondere Radarsonde, eingesetzt.

Die Wärmetauscher, die in der Heizvorrichtung der vorliegende Erfindung eingesetzt werden, sind übliche Wärmetauscher, in denen ein durch Leitungen fliessender Wärmeträger durch ein diese Leitungen umströmendes Fluid erwärmt oder abgekühlt wird, wodurch das Fluid Wärme an den Wärmeträger abgibt oder von diesem aufnimmt; die Fluide im Rahmen der vorliegenden Erfindung sind einerseits das Rauchgas (bzw. Rauchgas/Tertiärluft-Gemisch) und andererseits die zu erwärmende Luft.

Im Rahmen der vorliegenden Erfindung wird als Wärmeträger zur Übertragung der Wärme zwischen den Brennerteil und dem Lufterwärmungsteil, über den Flachrohrgaswärmetauscher-Abluftwärmetauscher-Kreislauf, bevorzugt ein Thermalöl (kann im Rahmen der vorliegenden Erfindung auch synonym Thermoöl genannt werden) eingesetzt.

Solche Thermalöle zur Ölkühlung und zur Beheizung von industriellen Anlagen und Prozessen in geschlossenen Kreisläufen sind grundsätzlich bekannt und diese Thermalöle können je nach ihrer chemischen Zusammensetzung unterschiedliche Eigenschaften aufweisen. Im Rahmen der vorliegenden Erfindung können als Thermalöle vorzugsweise Mineralöle (zum Beispiel Dieselöle), Synthetiköle (zum Beispiel Silikonöle), aromatische Kohlenwasserstoffe (zum Beispiel DP/DPO) eingesetzt werden. Besonders bevorzugt wird als Thermalöl Therminol SP eingesetzt.

Über das Saug-Zuggebläse werden die Rauchgase (Verbrennungsabgase) aus der Heizvorrichtung, genauer der Brennerkammer, herausgezogen. Dadurch wird erreicht, dass die Komponenten wie (Pellet-)Vorratsbehälter, Brennkammer, Wärmetauscherbereich, Tertiärluftführung (Kanäle, insbesondere in der doppelwandigen, innen hohlen Brennkammerwand) einen Innendruck aufweisen, der niedriger ist als der Umgebungsdruck. Dies ist insbesondere beim Anfahren der Heizvorrichtung vorteilhaft, hat aber auch einen unterstützenden Effekt im laufenden Betrieb. Zudem wird sichergestellt, dass die Rauchgase nur durch den Kamin austreten (also lenkbar) und nicht durch eventuelle Undichtigkeiten. Das Saug-Zuggebläse kann zum Beispiel aus einem drehzahlgeregelten Gebläsemotor, der ein Lüfterrad antreibt, bestehen.

Auch das im Heizteil angeordnete Gebläse kann einen drehzahlgeregelten Motor aufweisen, der das Lüfterrad antreibt. Genauso gut kann das Gebläse im Heizteil aber auch eine kombinierte Einrichtung aus mehreren Lüfterrädern sein.

In bevorzugten Ausgestaltungen weist die Brennstoffzuführung der Heizvorrichtung über eine Förderschnecke einen verhältnismässig geringen Querschnitt bei verhältnismässig grosser Längenausdehnung auf, so dass ein grosser Teil der Wärme über die (Stahl-)Wände der Zuführeinrichtung abgestrahlt wird und die Temperatur von der Brennkammer in Richtung (Pellet-)Vorratsbehälter sehr schnell abnimmt. Zudem ist eine verhältnismässig geringe Menge Brennstoff in der Förderschnecke enthalten, die in der Regel keine ausreichende Hitze für einen Rückbrand entwickeln kann, da die Wärmeverluste überwiegen und eventuelle Glut sich nicht fortsetzen kann. Obwohl demgemäss bei der erfindungsgemäss bevorzugten Schneckenförderung des Brennstoffs in die Brennkammer das Risiko eines Rückbrandes aus der Brennkammer in Richtung (Pellet-)Vorratsbehälter als gering eingestuft wird, kann zur Sicherheit in Varianten der vorliegenden Erfindung dennoch eine Sicherung, z.B. Schmelzsicherung, angeordnet sein, wodurch Löschwasser, COz, N₂, oder ein anderes Löschmittel ausgelöst werden können, um einen solchen Rückbrand zu löschen.

Je besser die Verbindung zwischen Flachrohrrauchgaswärmetauscher und Abluftwärmetauscher isoliert ist und je kürzer sie ist, desto effektiver ist die Wärmeeffizienz der Wärmeübertragung; insofern ist es im Rahmen der vorliegenden Erfindung bevorzugt, wenn diese Verbindung möglichst kurz und möglichst gut isoliert ist.

Einige erwähnenswerte Aspekte der vorliegenden Erfindung sind demnach unter anderem die folgenden:
Die Heizvorrichtung der vorliegenden Erfindung nutzt bevorzugt Brennstoff auf Basis von Biomasse, insbesondere Holzpellets, und nutzt zur Wärmeübertragung vom Brennerteil zum Heizteil als Wärmeträger bevorzugt Thermalöl.

Die Heizvorrichtung der vorliegenden Erfindung nutzt zur Wirkungsgradsteigerung bevorzugt auch geregelte Tertiärluft (die Menge an angesaugter Tertiärluft wird durch eine stufenlos einstellbare Lüfterklappe geregelt, in Abhängigkeit von der Temperatur in der Brennkammer; beim Anfahren der Heizvorrichtung wird zunächst keine Tertiärluft angesaugt), wobei die Gewinnung der Energie in zwei Stufen erfolgt; als erste Stufe ein Tertiärluftwärmetauscher, bei dem die frisch angesaugte Tertiärluft durch das Rauchgas (bzw. Rauchgas/Luft-Gemisch) erwärmt wird und als zweite Stufe die Abstrahlungswärme der Brennkammer, wenn die im Tertiärluftwärmetauscher vorgewärmte Tertiärluft durch die doppelwandige, innen hohle Brennkammerwand strömt.

Die Heizvorrichtung der vorliegenden Erfindung weist eine Rauchgasklappe auf, die (automatisch) geregelt einen zuverlässigen Überhitzungsschutz bewirkt.

Die Heizvorrichtung der vorliegenden Erfindung ermöglicht eine direkte Wärmerückgewinnung durch Mitverwendung von Abstrahlungswärmetauscher.

Die Heizvorrichtung der vorliegenden Erfindung weist eine automatische Überwachung des Brennstoffvorrats auf, in einer Variante bevorzugt mittels einer Radarsonde für die kontinuierliche Messung und Überwachung des Vorrats an biomassebasiertem Brennstoff (Pellets).

Das Brennrost in der Brennkammer besteht in bevorzugten Varaianten aus Hochtemperaturstahl-Lamellen auf einer zentralen Welle, wo sie verdrehgesichert gelagert sind.

Die Brennrost-Lamellen sind in diesem Fall in einem definierten Abstand mittels Distanzelementen gehalten und erlauben dadurch einerseits die Zufuhr der Primärluft (unter Strömung) zum Brenngut, und andererseits dienen sie dergestalt (unterstützend) der Abreinigung beziehungsweise der Ascheabführung in den darunterliegenden Aschebehälter.

Die Abreinigung wird in einigen bevorzugten Varianten automatisch in Abhängigkeit von den Abgaswerten, welche durch eine Lambdasonde ermittelt werden, initialisiert. Der Abreinigungsprozess kann zum Beispiel derart ausgeführt werden, dass eine rotatorischen Bewegung in einem vorbestimmten Winkel vom Brennrost durchgeführt wird, welche im Endpunkt der Bewegung durch einen fixierten Kamm gezogen wird. Der Kamm selbst besteht dabei bevorzugt aus fixen Lamellen.

Als Wärmetauscher zur Erwärmung des Thermalöls dient insbesondere ein Flachrohrrauchgaswärmetauscher (Energieumsetzung im primären Kreislauf des Heizkessels) solche Wärmetauscher sind kommerziell zum Beispiel von der Fercher GmbH erhältlich.

Eine Rauchgasklappe dient als Überhitzungsschutz, wobei die Temperatur des Wärmeträgers und/oder der Anlage überwacht und bei Erreichen von kritischen Grenztemperaturen die Rauchgasklappe automatisch geöffnet wird. Die Grenzwerte für Rauchgase liegen bei 550°C und bei Thermalöl 280°C im Normalbetrieb. Beim Not-Aus, bzw. Stromausfall wird schon bei der Rauchgastemperatur von 150°C diese ausgelöst.

Obwohl die Erfindung primär die Verwendung von Biomassenprodukten als Brennstoffen gerichtet ist, sollte verstanden werden, dass die erfindungsgemäss Heizvorrichtung auch zur Verbrennung anderer Stoffe geeignet ist. Zum Beispiel kann auch Kohle verbrannt werden (was in weiterem Sinne noch unter Biomasse fallen könnte) oder auch Kunststoffe, am besten in Granulatform. Für die Verbrennung von Kunststoffen kann es jedoch notwendig sein, einen Abgasfilter bzw. eine Abgasfilteranlage anzubauen (reines Polyethylen zum Beispiel ist jedoch bei entsprechender Steuerung der erfindungsgemässen Heizvorrichtung auch ohne Filter verbrennbar). Insofern ist auch die Verwendung der erfindungsgemässen Heizvorrichtung zur Verbrennung von Kunststoffen von der vorliegenden Erfindung umfasst.

Optional ist die erfindungsgemässe Heizvorrichtung mit einer Vorrichtung zur Erzeugung von elektrischer Energie ausgestattet. Hierbei befinden sich in einer möglichen Variante nach dem Seebeck-Effekt arbeitende Elemente, vorzugsweise handelsübliche Peltier-Elemente in gutem wärmeleitendem Kontakt zwischen den heissen Verbrennungsgasen auf der einen Seite und dem noch oder wieder kühler(en) Wärmeübertrager auf der anderen Seite. Hierdurch wird ein Temperaturgefälle innerhalb der Elemente erzeugt, wodurch eine elektrische Spannung generiert wird und elektrische Energie abgenommen werden kann. Die erzeugte elektrische Energie ist im besten Fall ausreichend, um den (Getriebe-)Motor für die Brennstoffzufuhr, das Saug-Zuggebläse und die Regeleinrichtung bzw. Steuerelektronik (falls vorhanden) zu versorgen und über einen standardisierten Steckverbinder externe Kleinverbraucher wie LED-Lampen zu speisen oder Akkumulatoren von mobilen Geräten aufzuladen. Hierdurch ist die Heizvorrichtung erfindungsgemäss auch für den Einsatz in abgelegenen Bereichen geeignet, in denen weder ein öffentliches elektrisches Stromnetz noch der Anschluss an eine Fahrzeug- oder Wohnwagenbatterie zur Verfügung steht.

Der Fachmann kann die genaue Ausgestaltung der Brennkammer wie beispielsweise Grösse, Wanddicken, Materialien etc. für ein bestimmtes Brenngut bzw. einen bestimmten Energieumsatz/Heizwert im Rahmen seines allgemeinen Fachwissens problemlos vornehmen.

Sofern bei der Beschreibung der erfindungsgemässen Vorrichtung Teile oder die ganze Vorrichtung als "bestehend" aus gekennzeichnet sind, ist darunter zu verstehen, dass sich dies auf die genannten wesentlichen Bestandteile bezieht. Selbstverständliche oder inhärente Teile wie Leitungen, Ventile, Schrauben, Messeinrichtungen, etc. sind dadurch nicht ausgeschlossen. Bevorzugt aber sind andere wesentliche Bestandteile, wie dies weitere Brennkammern, o.ä. wären, die die Funktion(sweise) ändern würden, ausgeschlossen.

Figurenbeschreibung:
Die vorliegende Erfindung wird im Folgenden mit Bezugnahme auf die Zeichnungen näher erläutert. Die Zeichnungen sind dabei nicht limitierend auszulegen und nicht massstabsgetreu. Die Zeichnungen sind schematisch und enthalten weiterhin nicht alle Merkmale, die übliche Vorrichtungen aufweisen, sondern sind auf die für die vorliegende Erfindung und ihr Verständnis wesentlichen Merkmale reduziert, beispielsweise sind Schrauben, Anschlüsse etc. nicht oder nicht im Detail dargestellt. Gleiche Bezugszeichen zeigen in den Figuren, der Beschreibung und den Ansprüchen gleiche Merkmale.

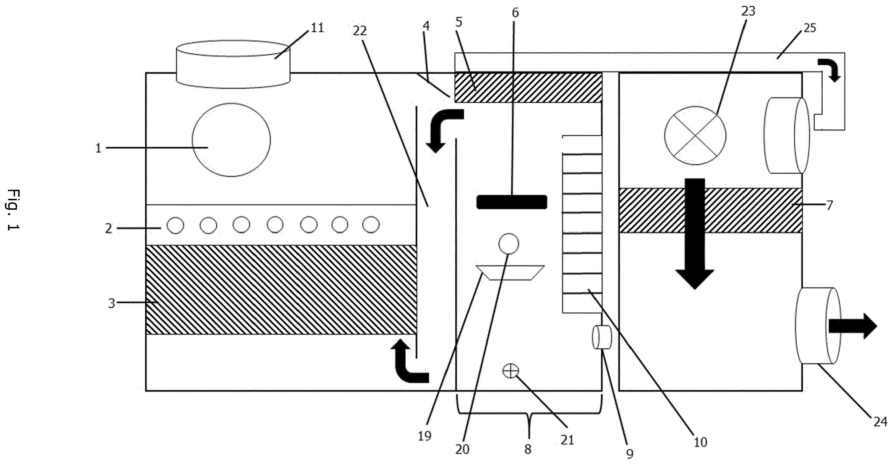

Figur 1 zeigt eine Ausgestaltung einer Variante einer erfindungsgemässen Heizvorrichtung schematisch von vorne. Dabei ist links der Brennerteil dargestellt und rechts der Heizteil. Im Brennerteil ist rechts unten eine Öffnung bzw. ein Einlass für Primärluft 9 illustriert (hier als eine einzelne Öffnung dargestellt, es können aber auch mehrere Kanäle sein, aber auch gitterförmig oder noch anders ausgestaltet sein; gitterförmig hat sich bewährt, um kein Brenngut austreten zu lassen). Von dort strömt Luft in die Brennkammer 8. In der Brennkammer sind angedeutet der Brennrost 19, die Zufuhröffnung für den Brennstoff 20 und ganz unten die Förderschnecke für den Brennstoffabfallabtransport 21 (die Brennstoffsammelkammer an sich ist hier nicht gezeigt, da sie sich in dieser Darstellung hinter der Förderschnecke 21 befände). Oberhalb von dem Brennrost 19 befindet sich der Sekundärlufteinlass 6 (hier als gefülltes abgerundetes Rechteck dargestellt, kann in Realität zum Beispiel gitterförmig oder noch anders ausgestaltet sein; gitterförmig hat sich bewährt, um kein Brenngut austreten zu lassen). In der Brennkammer 8 wird das Brenngut verbrannt und die Rauchgase steigen auf. Diese stossen oben an die Begrenzung des Brennkammer 8, wo sie Wärme an einen darauf angeordneten Abstrahlungswärmetauscher 5 abgeben und ansonsten dem Weg nach links in den Rauchgaskanal 22 folgen (siehe gefüllter Pfeil). Der Weg durch den Rauchgaskanal 22 führt dann nach unten, im Gegenstrom entlang der (heissen) Wand zur Brennkammer 8. Unten angekommen führt der Weg nach links (siehe gefüllter Pfeil) und aufwärts in den Bereich der Wärmetauscher. Dort strömt das Rauchgas zunächst durch einen Flachrohrrauchgaswärmetauscher 3 und anschliessend durch einen Tertiärluftwärmetauscher 2. Darüber ist das Saug-Zuggebläse 1 angeordnet, durch das ein Unterdruck in dem Brennerteil erzeugt wird. Schliesslich strömt das Rauchgas durch den Kamin 11 nach draussen. Weiterhin ist gezeigt ist die Rauchgasklappe 4, welche bei zu hoher Temperatur eine direkte Verbindung vom Anfang des Rauchgaskanals 4 zum Anfang des Kamins 11 herstellt, um damit eine Überhitzung der Vorrichtung bzw. des Wärmeträgers im Flachrohrrauchgaswärmetauscher zu verhindern (hier in geöffneter Stellung illustriert). Der Tertiärluftwärmetauscher 2 ist hier als eine Reihe von Kreisen dargestellt, welche Rohre darstellen. Diese werden von heissem Rauchgas umströmt und durch diese wird Tertiärluft von aussen angesaugt. Diese Tertiärluft fliesst dann durch Leitungen (nicht gezeigt) zu der doppelwandigen, innen hohlen Brennkammerwand 10, die hier in Form von Rechtecken illustriert ist, um Prallbleche anzudeuten, die eine mäanderartige Strömungsführung bewirken. In der doppelwandigen, innen hohlen Brennkammerwand 10 strömt die Tertiärluft mäanderartig nach oben, wobei sie durch die heisse Brennkammerwand erwärmt wird, und tritt am oberen Ende durch die Öffnung der doppelwandigen, innen hohlen Brennkammerwand 10 aus und in die Brennkammer ein, bevorzugt oberhalb von Brennzone und Nachbrennzone. Danach strömt es mit dem Rauchgas in der beschriebenen Art durch das Brennerteil.

Das rechts in der Figur dargestellte Heizteil umfasst ein Luftansauggebläse 23, welches zu erwärmende Luft von aussen ansaugt. Das Heizteil weist zudem an seinem oberen Ende mit dem Luftansaugteil 25 eine Verbindung zu dem Abstrahlungswärmetauscher 5 auf (wodurch die dort erwärmte Luft entweder von oberhalb des Abstrahlungswärmetauschers 5 oder durch den Abstrahlungswärmetauscher 5 angesaugt wird - siehe gefüllter Pfeil). Insofern wird also ein Teil der angesaugten Luft bereits erwärmt (durch den Abstrahlungswärmetauscher 5) angesaugt und ein Teil direkt aus der Umgebung. Die zu erwärmende teilweise schon etwas erwärmte Luft strömt dann hier nach unten und über den Abluftwärmetauscher 7 (siehe gefüllter Pfeil), wodurch die Luft erwärmt wird. Der Abluftwärmetauscher 7 wird von heissem Thermalöl durchströmt, welches im Brennerteil im Flachrohrrauchgaswärmetauscher 3 durch das heisse Rauchgas erwärmt wurde. Die erwärmte Luft tritt dann durch die Auslassöffnung für die erwärmte Luft 24 aus der Vorrichtung aus (siehe gefüllter Pfeil) und kann zur Beheizung verwendet werden.

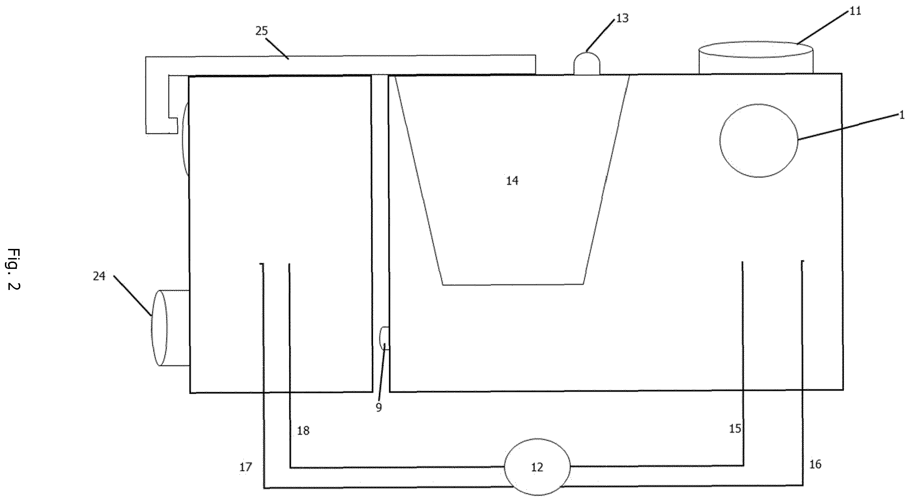

Figur 2 zeigt die Ausgestaltung gemäss Figur 1 von hinten, insofern befindet sich jetzt der Brennerteil rechts und der Heizteil links. Etwa mittig in der Figur dargestellt ist der (Pellet-)Vorratsbehälter 14, von dem aus das Brenngut in die Brennkammer gefördert wird. Am oberen Ende des (Pellet-)Vorratsbehälters 14 ist eine Radarsonde 13 illustriert, mit der der Füllstand des (Pellet-)Vorratsbehälters 14 überwacht wird. Darüber hinaus ist rechts das Saug-Zuggebläse 1 als Kreis dargestellt, da der entsprechende Antriebsmotor des Gebläses in der Regel (wie hier dargestellt) an der Rückwand des Brennerteils installiert ist. Unterhalb des Saug-Zuggebläses 1 befinden sich die Wärmetauscher, die hier nicht weiter dargestellt sind. Dargestellt sind hingegen der Vorlauf zum Flachrohrrauchgaswärmetauscher 15 und der Rücklauf vom Flachrohrrauchgaswärmetauscher 16, in Verbindung mit Pumpe 12. Die Pumpe 12 ist hier zwar unterhalb des Gehäuses dargestellt, jedoch dient dies lediglich zur einfacheren Illustration, normalerweise befindet sie sich direkt an oder ein kleines Stück hinter der hinteren Gehäusewand. Entsprechend ebenfalls mit der Pumpe verbunden sind der Vorlauf zum Abluftwärmetauscher 17 und der Rücklauf vom Abluftwärmetauscher 18, da die beiden Wärmetauscher einen Kreislauf bilden, der von Wärmeträger, bevorzugt Thermalöl, durchströmt wird. Diese beiden Rohrleitungen enden links im Heizteil an der Stelle, an der sich der Abluftwärmetauscher 7 befindet.

### Beispiel:

Die Erfindung wird nun unter Bezugnahme auf das folgende, nicht-limitierende Beispiel weiter erläutert.

Eine Heizvorrichtung, wie in den Figuren dargestellt, wurde mit handelsüblichen Holzpellets als Brenngut beschickt und die Verbrennung gestartet. Nach Erreichen des stationären Zustands wurde am Flachrohrrauchgaswärmetauscher stabil eine Temperatur zwischen 220°C und 250°C erhalten.

Während der Verbrennung lief im Heizteil das Luftansauggebläse mit einer Leistung von etwa 6000 m³ dadurch wurde ein Luftvolumenfluss von 10000 m³ erreicht, der auf 82°C bei einer Aussentemperatur von 0°C erwärmt werden konnte.

Es wurde konstant (ausser bei an- und abfahren) eine Leistung von 200 kW erzielt.

Man sieht anhand der Daten, dass die erfindungsgemässe Heizvorrichtung sehr effektiv ist und einen hohen Wirkungsgrad erzielt.

### Bezugszeichenliste

- 1: Saug-Zuggebläse
- 2: Tertiärluftwärmetauscher
- 3: Flachrohrrauchgaswärmetauscher
- 4: Rauchgasklappe
- 5: Abstrahlungswärmetauscher
- 6: Sekundärluftkanal bzw. -einlass
- 7: Abluftwärmetauscher
- 8: Brennkammer
- 9: Primärluftkanal bzw. -einlass
- 10: doppelwandige, innen hohle Brennkammerwand (mit innenliegenden Prallblechen für mäanderartige Strömungsführung)
- 11: Kamin
- 12: Pumpe
- 13: (Radar-)Sonde
- 14: (Pellet-)Vorratsbehälter
- 15: Vorlauf zum Flachrohrrauchgaswärmetauscher
- 16: Rücklauf vom Flachrohrrauchgaswärmetauscher
- 17: Vorlauf zum Abluftwärmetauscher
- 18: Rücklauf vom Abluftwärmetauscher
- 19: Brennrost
- 20: Zufuhröffnung für den Brennstoff
- 21: Förderschnecke für den Brennstoffabfallabtransport
- 22: Rauchgaskanal
- 23: Luftansauggebläse
- 24: Auslassöffnung für die erwärmte Luft
- 25: Luftansaugteil, das Luft von oberhalb des Abstrahlungswärmetauschers oder durch den Abstrahlungswärmetauscher ansaugt

## Patentansprüche

1. Heizvorrichtung umfassend
A) einen Brennerteil umfassend
- eine Brennkammer (8),
- eine doppelwandige, innen hohle Brennkammerwand (10), die eine obere Öffnung hat, die oberhalb der Brennzone in die Brennkammer (8) mündet,
- einen Rauchgaskanal (22), der das Rauchgas entlang der Brennkammer (8) nach unten führt,
- an den Rauchgaskanal (22) anschliessend einen Wärmetauscherbereich umfassend
- zuerst einen Flachrohrrauchgaswärmetauscher (3),
- dann einen Tertiärluftwärmetauscher (2),
- einen Rauchgasabluftkamin (11),
- einen oberhalb der Brennkammer (8) angeordneten Abstrahlungswärmetauscher (5),
- eine Rauchgasklappe (4) am oberen Ende des Rauchgaskanals (22), die in geöffnetem Zustand den Rauchgaskanal (22) mit dem Kamin (11) verbindet,
B) einen Heizteil umfassend
- ein Luftansauggebläse (23),
- einen Abluftwärmetauscher (7) mit demselben Wärmeträger wie der Flachrohrrauchgaswärmetauscher (3),
- einer Auslassöffnung für die erwärmte Luft (24),
wobei der Flachrohrrauchgaswärmetauscher (3) mit dem Abluftwärmetauscher (7) einen Wärmetauscherkreislauf bildet.

2. Heizvorrichtung nach Anspruch 1, **dadurch gekennzeichnet, dass** die Brennkammer (8) umfasst
- Einlasskanäle oder Einlassöffnungen für Primärluft und Sekundärluft (6, 9),
- ein Brennrost (19) und optional einen Brenner,
- eine Zuführöffnung für Brennstoff (20),
- eine Brennstoffabfallsammelkammer und/oder eine Brennstoffabfallabführvorrichtung, bevorzugt einen Kanal, insbesondere durch eine Förderschnecke zum Abtransport des Brennstoffabfalls (21) mit der Brennkammer (8) verbunden.

3. Heizvorrichtung nach Anspruch 1 oder 2, **dadurch gekennzeichnet, dass** sie einen (Pellet-)Vorratsbehälter (14), der mit der Brennkammer (8) über die Zuführöffnung für Brennstoff (20) verbunden ist, bevorzugt über eine Förderschnecke, umfasst.

4. Heizvorrichtung nach einem der Ansprüche 1 bis 3, **dadurch gekennzeichnet, dass** die obere Öffnung der doppelwandigen, innen hohlen Brennkammerwand (10) bevorzugt oberhalb von Brennzone und Nachbrennzone, in die Brennkammer (8) mündet, und dass die doppelwandige, innen hohle Brennkammerwand (10) eine untere Öffnung oder einen Anschluss, konfiguriert Tertiärluft eingeleitet zu bekommen, aufweist.

5. Heizvorrichtung nach einem der Ansprüche 1 bis 4, **dadurch gekennzeichnet, dass** der Rauchgaskanal (22) im Bezug zu der doppelwandigen, innen hohlen Brennkammerwand (10) auf der anderen Seite der Brennkammer (8) angeordnet ist, und das Rauchgas entlang seiner Wand zur Brennkammer nach unten führt.

6. Heizvorrichtung nach einem der Ansprüche 1 bis 5, **dadurch gekennzeichnet, dass** der Wärmetauscherbereich aus Blickrichtung der Brennkammer (8) jenseits des Rauchgaskanals (22) angeordnet ist und der Flachrohrrauchgaswärmetauscher (3) mit Thermalöl als Wärmeträger betrieben wird und der Tertiärluftwärmetauscher (2) Einlasskanäle oder Einlassöffnungen für Tertiärluft umfasst und Ableitungen für die erwärmte Tertiärluft, die mit der doppelwandigen, innen hohlen Brennkammerwand (10) verbunden sind, umfasst.

7. Heizvorrichtung nach einem der Ansprüche 1 bis 6, **dadurch gekennzeichnet, dass** anschliessend an den Wärmetauscherbereich ein Bereich mit Saug-Zuggebläse (1) anschliesst, oder dass ein Saug-Zuggebläse (1) im oder am Rauchgasabluftkamin (11) angeordnet ist.

8. Heizvorrichtung nach einem der Ansprüche 1 bis 7, **dadurch gekennzeichnet, dass** das Heizteil ein Luftansaugteil (25), das Luft von oberhalb des Abstrahlungswärmetauschers (5) oder durch den Abstrahlungswärmetauscher (5) ansaugt, umfasst.

9. Heizvorrichtung nach einem der Ansprüche 1 bis 3, **dadurch gekennzeichnet, dass** das Luftansauggebläse (23) des Heizteils zumindest zum Teil, bevorzugt zum Teil, besonders bevorzugt 40 bis 60%, insbesondere 50%, Luft aus dem Luftansaugteil (25) ansaugt und ansonsten Luft aus der Umgebung ansaugt, wobei sich die Prozente auf die Gesamtmenge angesaugter Luft beziehen.

10. Heizvorrichtung nach einem der Ansprüche 1 bis 9, **dadurch gekennzeichnet, dass** die beiden Teile A) und B) durch die Verrohrung des Flachrohrrauchgaswärmetauschers (3) mit dem Abluftwärmetauscher (7), und gegebenenfalls durch die Verbindung der Luftansaugung des Heizteils zu dem Abstrahlungswärmetauscher (5), verbunden sind und ansonsten physikalisch getrennte Einheiten sind.

11. Heizvorrichtung nach einem der Ansprüche 1 bis 10, bevorzugt für die Verbrennung von Biomasse, insbesondere von Pellets aus Biomasse, umfassend oder bestehend aus
A) einem Brennerteil umfassend
- eine Brennkammer (8) umfassend
- Einlasskanäle oder Einlassöffnungen für Primärluft und Sekundärluft (6, 9),
- ein Brennrost (19) und einen Brenner
- eine Zuführöffnung für Brennstoff (20),
- eine Brennstoffabfallsammelkammer und/oder eine Brennstoffabfallabführvorrichtung, bevorzugt einen Kanal, insbesondere durch eine Förderschnecke zum Abtransport des Brennstoffabfalls (21) mit der Brennkammer (8) verbunden,
- einen (Pellet-)Vorratsbehälter (14), der mit der Brennkammer (8) über die Zuführöffnung für Brennstoff (20) verbunden ist, bevorzugt über eine Förderschnecke,
- eine doppelwandige, innen hohle Brennkammerwand (10), die eine obere Öffnung hat, die oberhalb der Brennzone, bevorzugt oberhalb von Brennzone und Nachbrennzone, in die Brennkammer (8) mündet, und eine untere Öffnung oder Anschluss, konfiguriert Tertiärluft eingeleitet zu bekommen, aufweist,
- einen Rauchgaskanal (22), der im Bezug zu der doppelwandigen, innen hohlen Brennkammerwand (10) auf der anderen Seite der Brennkammer (8) angeordnet ist, und das Rauchgas von oben herab entlang seiner an die Brennkammer grenzenden Wand nach unten führt,
- an den Rauchgaskanal (22) anschliessend, in Strömungsrichtung des Rauchgases jenseits des Rauchgaskanals (22) angeordnet, einen Wärmetauscherbereich umfassend
- zuerst einen Flachrohrrauchgaswärmetauscher (3), bevorzugt mit Thermalöl als Wärmeträger,
- dann einen Tertiärluftwärmetauscher (2) umfassend Einlasskanäle oder Einlassöffnungen für Tertiärluft und Ableitungen für die erwärmte Tertiärluft, die mit der doppelwandigen, innen hohlen Brennkammerwand (10) verbunden sind,
- optional anschliessend an den Wärmetauscherbereich einen Bereich mit Saug-Zuggebläse (1),
- einen Rauchgasabluftkamin (11),
- einen oberhalb der Brennkammer (8) angeordneten Abstrahlungswärmetauscher (5),
- eine Rauchgasklappe (4) am oberen Ende des Rauchgaskanals (22), die in geöffnetem Zustand den Rauchgaskanal (22) mit dem Kamin (11) verbindet,
B) einem Heizteil umfassend
- ein Luftansaugteil (25), das Luft von oberhalb des Abstrahlungswärmetauschers (5) oder durch den Abstrahlungswärmetauscher (5) ansaugt,
- ein Luftansauggebläse (23), das zumindest zum Teil, bevorzugt zum Teil, besonders bevorzugt 40 bis 60%, insbesondere 50%, Luft aus dem Luftansaugteil (25) ansaugt und ansonsten Luft aus der Umgebung ansaugt, wobei sich die Prozente auf die Gesamtmenge angesaugter Luft beziehen,
- einen Abluftwärmetauscher (7) mit demselben Wärmeträger wie der Flachrohrrauchgaswärmetauscher (3), bevorzugt Thermalöl,
- einer Auslassöffnung für die erwärmte Luft,
wobei der Flachrohrrauchgaswärmetauscher (3) mit dem Abluftwärmetauscher (7) einen Wärmetauscherkreislauf bildet, und die beiden Teile A) und B) durch die Verrohrung des Flachrohrrauchgaswärmetauschers (3) mit dem Abluftwärmetauscher (7), und gegebenenfalls durch die Verbindung des Luftansaugteils (25) des Heizteils zu dem Abstrahlungswärmetauscher (5), verbunden sind und optional ansonsten physikalisch getrennte Einheiten sind.

12. Brennerteil, bevorzugt für eine Heizvorrichtung, umfassend
- eine Brennkammer (8) umfassend
- Einlasskanäle oder Einlassöffnungen für Primärluft und Sekundärluft (6, 9),
- ein Brennrost (19) und einen Brenner
- eine Zuführöffnung für Brennstoff (20),
- eine Brennstoffabfallsammelkammer und/oder eine Brennstoffabfallabführvorrichtung
- einen (Pellet-)Vorratsbehälter (14), der mit der Brennkammer (8) über die Zuführöffnung für Brennstoff (20) verbunden ist, bevorzugt über eine Förderschnecke,
- eine doppelwandige, innen hohle Brennkammerwand (10), die eine obere Öffnung hat, die oberhalb der Brennzone, bevorzugt oberhalb von Brennzone und Nachbrennzone, in die Brennkammer (8) mündet, und eine untere Öffnung, konfiguriert Tertiärluft eingeleitet zu bekommen,
- einen Rauchgaskanal (22), der im Bezug zu der doppelwandigen, innen hohlen Brennkammerwand (10) auf der anderen Seite der Brennkammer (8) angeordnet ist, und das Rauchgas von oben herab entlang seiner an die Brennkammer grenzenden Wand nach unten führt,
- an den Rauchgaskanal (22) anschliessend, in Strömungsrichtung des Rauchgases jenseits des Rauchgaskanals (22) angeordnet, einen Wärmetauscherbereich umfassend
- zuerst einen Flachrohrrauchgaswärmetauscher (3), bevorzugt mit Thermalöl als Wärmeträger,
- dann einen Tertiärluftwärmetauscher (2) umfassend Einlasskanäle oder Einlassöffnungen für Tertiärluft und Ableitungen für die erwärmte Tertiärluft, die mit der doppelwandigen, innen hohlen Brennkammerwand (10) verbunden sind,
- optional anschliessend an den Wärmetauscherbereich einen Bereich mit Saug-Zuggebläse (1),
- einen Rauchgasabluftkamin (11),
- einen oberhalb der Brennkammer (8) angeordneten Abstrahlungswärmetauscher (5),
- eine Rauchgasklappe (4) am oberen Ende des Rauchgaskanals (22), die in geöffnetem Zustand den Rauchgaskanal (22) mit dem Kamin (11) verbindet.

13. Verfahren zur Steigerung des Wirkungsgrads einer Heizvorrichtung durch
- befeuern einer Verbrennung in einer Brennkammer (8), bevorzugt wie in den vorhergehenden Ansprüchen beschreiben, unter Zuführung von Primärluft durch die Brennzone und Zufuhr von Sekundärluft am oberen Ende der Brennzone,
- leiten des Rauchgases über zunächst einen Flachrohrrauchgaswärmetauscher (3) und dann über einen Tertiärluftwärmetauscher (2),
- leiten der so erwärmten Tertiärluft in eine doppelwandige, innen hohle Brennkammerwand (10) zur weiteren Erwärmung,
- einleiten der erwärmten Tertiärluft aus der doppelwandigen, innen hohlen Brennkammerwand (10) in die Brennkammer (8) oberhalb der Brennzone, bevorzugt oberhalb von Brennzone und Nachbrennzone, und Vermischung mit dem Rauchgas,
- übertragen von Wärme auf zumindest einen Teil der zu erwärmenden Luft, durch einen oberhalb der Brennkammer (8) angeordneten Wärmetauscher (5),
- übertragen von weiterer Wärme auf die zu erwärmende Luft durch einen Abluftwärmetauscher (7) mittels im Flachrohrrauchgaswärmetauscher (3) erwärmten Wärmeträger, insbesondere Thermalöl.

14. Verwendung der Heizvorrichtung gemäss einem der Ansprüche 1 bis 11 zur Erwärmung von zu erwärmenden Bereichen, oder des Verfahrens gemäss Anspruch 13 zur Erhöhung der Effizienz von Heizvorrichtungen.

15. Verwendung des Brennerteils gemäss Anspruch 12 zur Verbrennung von Brennstoffen, bevorzugt aus Biomasse, insbesondere Holzpellets, oder zur Erwärmung von zu erwärmenden Bereichen, optional zusammen mit einem Heizteil, insbesondere einem Heizteil wie in den Ansprüchen 1 bis 11beschrieben.

## Claims

1. Heating device, comprising
A) a burner part, comprising
- a combustion chamber (8)
- a double-walled, internally hollow combustion-chamber wall (10), which has an upper opening leading above the combustion zone into the combustion chamber (8),
- a flue-gas duct (22) which leads the flue gas downwards along the combustion chamber (8),
- the flue-gas duct (22) is followed by a heat-exchanger area comprising
- initially, a flat-tube flue-gas heat exchanger (3),
- then, a tertiary-air heat exchanger (2),
- a flue-gas ventilation stack (11),
- a radiant-heat exchanger (5) located above the combustion chamber (8),
- a flue-gas flap (4) at the upper end of the flue-gas duct (22), which, when open, connects the flue-gas duct (22) to the stack (11),
B) a heating part, comprising
- an air suction blower (23),
- an exhaust-air heat exchanger (7) with the same heat-transfer medium as the flat-tube flue-gas heat exchanger (3),
- an outlet opening for the heated air (24),
wherein the flat-tube flue-gas heat exchanger (3) forms a heat-exchanger circuit with the exhaust-air heat exchanger (7).

2. Heating device according to Claim 1, **characterized in that** the combustion chamber (8) comprises
- inlet ducts or inlet openings for primary air and secondary air (6, 9),
- a firing grate (19) and, optionally, a burner,
- a feed opening (20) for combustible material,
- a combustible material-waste collection chamber and/or a combustible material-waste discharge device, preferably a duct, in particular connected to the combustion chamber (8) via a screw conveyor for the removal of the combustible material waste (21) .

3. Heating device according to Claim 1 or 2, **characterized in that** it comprises a (pellet) storage container (14), which is connected to the combustion chamber (8) via the feed opening for combustible material (20), preferably via a screw conveyor.

4. Heating device according to any one of the Claims 1 to 3, **characterized in that** the upper opening of the double-walled, internally hollow combustion-chamber wall (10) leads into the combustion chamber (8), preferably above the combustion zone and afterburn zone, and that the double-walled, internally hollow combustion-chamber wall (10) comprises a lower opening or a connection, configured to get tertiary air introduced.

5. Heating device according to any one of the Claims 1 to 4, **characterized in that** the flue-gas duct (22) is arranged in relation to the double-walled, internally hollow combustion-chamber wall (10) on the other side of the combustion chamber (8), and leads the flue gas along its wall downwards to the combustion chamber.

6. Heating device according to any one of the Claims 1 to 5, **characterized in that** the heat-exchanger area is arranged from the viewing direction of the combustion chamber (8) beyond the flue-gas duct (22) and the flat-tube flue-gas heat exchanger (3) is operated with thermal oil as a heat-transfer medium and the tertiary-air heat exchanger (2) comprises inlet ducts or inlet openings for tertiary air and comprises discharges for the heated tertiary air, which are connected to the double-walled, internally hollow combustion-chamber wall (10).

7. Heating device according to any one of the Claims 1 to 6, **characterized in that** subsequently to the heat-exchanger area an area with induced-draft blower (1) adjoins, or that a induced-draft blower (1) is arranged in or at the flue-gas exhaust stack (11).

8. Heating device according to any one of the Claims 1 to 7, **characterized in that** the heating part comprises an air-intake part (25) which sucks in air from above the radiant-heat exchanger (5) or through the radiant-heat exchanger (5).

9. Heating device according to any one of the Claims 1 to 3, **characterized in that** the air-intake blower (23) of the heating part sucks in air from the air-intake part (25) at least partially, preferably partially, particularly preferably 40 to 60%, in particular 50%, and otherwise sucks in air from the environment, wherein the percentages refer to the total amount of air sucked in.

10. Heating device according to any one of the claims 1 to 9, **characterized in that** the two parts A) and B) are connected by the piping of the flat-tube flue-gas heat exchanger (3) to the exhaust-air heat exchanger (7), and, where applicable, by the connection of the air intake of the heating part to the radiant-heat exchanger (5), and are otherwise physically separated units.

11. Heating device according to any one of the Claims 1 to 10, preferably for the combustion of biomass, in particular pellets of biomass, comprising or consisting of
A) a burner part, comprising
- a combustion chamber (8), comprising
- inlet ducts or inlet openings for primary air and secondary air (6, 9),
- a firing grate (19) and a burner
- a feed opening for combustible material (20),
- a combustible material-waste collection chamber and/or a combustible material-waste discharge device, preferably a duct, in particular connected to the combustion chamber (8) via a screw conveyor for the removal of the combustible material waste (21),
- a (pellet) storage container (14), which is connected to the combustion chamber (8) via the feed opening for combustible material (20), preferably via a screw conveyor,
- a double-walled, internally hollow combustion-chamber wall (10), which comprises an upper opening which above the combustion zone, preferably above the combustion zone and afterburn zone, leads into the combustion chamber (8), and comprises a lower opening or connection configured to get tertiary air introduced,
- a flue-gas duct (22) arranged on the other side of the combustion chamber (8) in relation to the double-walled, internally hollow combustion-chamber wall (10) and leading the flue gas downwards from above along its wall adjacent to the combustion chamber,
- adjacent to the flue-gas duct (22), arranged in the flow direction of the flue gas beyond the flue-gas duct (22), a heat-exchanger area comprising,
- initially, a flat-tube flue-gas heat exchanger (3), preferably with thermal oil as a heat-transfer medium,
- then, a tertiary air heat exchanger (2) comprising inlet ducts or inlet openings for tertiary air and discharges for the heated tertiary air connected to the double-walled, internally hollow combustion-chamber wall (10),
- optionally, adjoining the heat-exchanger area, an area with an induced-draft blower (1),
- a flue-gas ventilation stack (11),
- a radiant-heat exchanger (5) located above the combustion chamber (8),
- a flue-gas flap (4) at the upper end of the flue-gas duct (22), which, when open, connects the flue-gas duct (22) to the stack (11),
B) a heating part, comprising
- an air-intake part (25) which sucks in air from above the radiant-heat exchanger (5) or through the radiant-heat exchanger (5),
- an air-intake blower (23) which at least partially, preferably partially, sucks air from the air-intake part (25), particularly preferably 40 to 60%, in particular 50%, and otherwise sucks in air from the environment, wherein the percentages refer to the total amount of air sucked in,
- an exhaust-air heat exchanger (7) with the same heat-transfer medium as the flat-tube flue-gas heat exchanger (3), preferably thermal oil,
- an outlet opening for the heated air,
wherein the flat-tube flue-gas heat exchanger (3) forms a heat-exchanger circuit with the exhaust-air heat exchanger (7), and the two parts A) and B) are connected by the piping of the flat-tube flue-gas heat exchanger (3) to the exhaust-air heat exchanger (7), and, where applicable, via the connection of the air-intake part (25) of the heating part to the radiant-heat exchanger (5), and optionally are otherwise physically separate units.

12. Burner part, preferably for a heating device, comprising
- a combustion chamber (8), comprising
- inlet ducts or inlet openings for primary air and secondary air (6, 9),
- a firing grate (19) and a burner
- a feed opening for combustible material (20),
- a combustible material-waste collection chamber and/or a combustible material-waste discharge device
- a (pellet) storage container (14), which is connected to the combustion chamber (8) via the feed opening for combustible material (20), preferably via a screw conveyor,
- a double-walled, internally hollow combustion-chamber wall (10), which has an upper opening which above the combustion zone, preferably above the combustion zone and afterburn zone, leads into the combustion chamber (8), and a lower opening, configured to get tertiary air introduced,
- a flue-gas duct (22) arranged on the other side of the combustion chamber (8) in relation to the double-walled, internally hollow combustion-chamber wall (10) and leading the flue gas downwards from above along its wall adjacent to the combustion chamber,
- adjacent to the flue-gas duct (22), arranged in the flow direction of the flue gas beyond the flue-gas duct (22), a heat-exchanger area comprising,
- initially, a flat-tube flue-gas heat exchanger (3), preferably with thermal oil as a heat-transfer medium,
- then, a tertiary-air heat exchanger (2) comprising inlet ducts or inlet openings for tertiary air and discharges for the heated tertiary air connected to the double-walled, internally hollow combustion-chamber wall (10),
- optionally, adjoining the heat-exchanger area, an area with an induced-draft blower (1),
- a flue-gas ventilation stack (11),
- a radiant-heat exchanger (5) located above the combustion chamber (8),
- a flue-gas flap (4) at the upper end of the flue-gas duct (22), which, when open, connects the flue-gas duct (22) to the stack (11).

13. Method for increasing the efficiency of a heating device by
- firing a combustion in a combustion chamber (8), preferably as described in the preceding claims, under supply of primary air through the combustion zone and supply of secondary air at the upper end of the combustion zone,
- conducting the flue gas via first a flat-tube flue-gas heat exchanger (3) and then via a tertiary-air heat exchanger (2),
- conducting the tertiary air thus heated into a double-walled, internally hollow combustion-chamber wall (10) for further heating,
- leading the heated tertiary air from the double-walled, internally hollow combustion-chamber wall (10) into the combustion chamber (8) above the combustion zone, preferably above the combustion zone and afterburn zone, and mixing with the flue gas,
- transferring heat to at least a part of the air to be heated by a heat exchanger (5) located above the combustion chamber (8),
- transferring further heat to the air to be heated by an exhaust-air heat exchanger (7) by means of heat-transfer medium, in particular thermal oil, heated in the flat-tube flue-gas heat exchanger (3) .

14. Use of the heating device according to any one of the Claims 1 to 11 for heating areas to be heated, or of the method according to Claim 13 for increasing the efficiency of heating devices.

15. Use of the burner part according to Claim 12 for the combustion of combustible materials, preferably of biomass, in particular wood pellets, or for heating areas to be heated, optionally together with a heating part, in particular a heating part as described in Claims 1 to 11.

## Revendications

1. Dispositif de chauffage comprenant
A) une partie de brûleur comprenant
- une chambre de combustion (8),
- une cloison de chambre de combustion creuse à l'intérieur, à double paroi (10), qui possède une ouverture supérieure, qui débouche au-dessus de la zone de combustion dans la chambre de combustion (8),
- un conduit de gaz de fumée (22), qui dirige le gaz de fumée vers le bas le long de la chambre de combustion (8),
- une zone d'échangeurs de chaleur faisant suite au conduit de gaz de fumée (22) comprenant
- d'abord un échangeur de chaleur de gaz de fumée à tubes plats (3),
- ensuite un échangeur de chaleur d'air tertiaire (2),
- une cheminée d'évacuation d'air de gaz de fumée (11),
- un échangeur de chaleur par rayonnement (5) disposé au-dessus de la chambre de combustion (8),
- un volet de gaz de fumée (4) à l'extrémité supérieure du conduit de gaz de fumée (22), qui à l'état ouvert relie le conduit de gaz de fumée (22) à la cheminée (11),
B) une partie de chauffage comprenant
- un ventilateur aspirant l'air (23),
- un échangeur de chaleur d'air évacué (7) avec le même caloporteur que l'échangeur de chaleur de gaz de fumée à tubes plats (3),
- une ouverture de sortie pour l'air chauffé (24),
sachant que l'échangeur de chaleur de gaz de fumée à tubes plats (3) forme un circuit d'échangeurs de chaleur avec l'échangeur de chaleur d'air évacué (7).

2. Dispositif de chauffage selon la revendication 1, **caractérisé en ce que** la chambre de combustion (8) comprend
- des conduits d'admission ou des ouvertures d'admission pour l'air primaire et l'air secondaire (6, 9),
- une grille de combustion (19) et en option un brûleur,
- une ouverture d'alimentation pour le combustible (20),
- une chambre de collecte des déchets de combustible et/ou un dispositif d'évacuation des déchets de combustibles, de préférence un conduit, en particulier relié à la chambre de combustion (8) par une vis de transport sans fin pour transporter les déchets de combustible (21).

3. Dispositif de chauffage selon la revendication 1 ou 2, **caractérisé en ce qu'**il comprend un conteneur de réserve (de granulés) (14), qui est relié à la chambre de combustion (8) par l'ouverture d'alimentation pour le combustible (20), de préférence par une vis de transport sans fin.

4. Dispositif de chauffage selon l'une quelconque des revendications 1 à 3, **caractérisé en ce que** l'ouverture supérieure de la cloison de chambre de combustion creuse à l'intérieur, à double paroi (10) débouche dans la chambre de combustion (8) de préférence au-dessus de la zone de combustion et de la zone de postcombustion, et **en ce que** la cloison de chambre de combustion creuse à l'intérieur, à double paroi (10) comporte une ouverture inférieure ou un raccord, configuré pour recevoir l'air tertiaire introduit.

5. Dispositif de chauffage selon l'une quelconque des revendications 1 à 4, **caractérisé en ce que** le conduit de gaz de fumée (22) est disposé par rapport à la cloison de chambre de combustion (10) creuse à l'intérieur à double paroi sur l'autre côté de la chambre de combustion (8) et dirige les gaz de fumée vers le bas le long de sa paroi vers la chambre de combustion.

6. Dispositif de chauffage selon l'une quelconque des revendications 1 à 5, **caractérisé en ce que** la zone d'échangeurs de chaleur est disposée, vue depuis la chambre de combustion (8) du côté du conduit de gaz de fumée (22) et l'échangeur de chaleur de gaz de fumée à tubes plats (3) est actionné avec de l'huile thermique en tant que caloporteur et l'échangeur de chaleur d'air tertiaire (2) comprend des conduits d'admission ou des ouvertures d'admission pour l'air tertiaire et comprend des conduites de dérivation pour l'air tertiaire chauffé, qui sont reliées à la cloison de chambre de combustion creuse à l'intérieur à double paroi (10).

7. Dispositif de chauffage selon l'une quelconque des revendications 1 à 6, **caractérisé en ce qu'**une zone avec un ventilateur aspirant et à tirage (1) est raccordée à la suite à la zone d'échangeurs de chaleur ou **en ce qu'**un ventilateur aspirant et à tirage (1) est disposé dans ou sur la cheminée d'évacuation des gaz de fumée (11).

8. Dispositif de chauffage selon l'une quelconque des revendications 1 à 7, **caractérisé en ce que** la partie de chauffage comprend une partie d'aspiration d'air (25), qui aspire l'air depuis le dessus de l'échangeur de chaleur par rayonnement (5) ou à travers l'échangeur de chaleur par rayonnement (5).

9. Dispositif de chauffage selon l'une quelconque des revendications 1 à 3, **caractérisé en ce que** le ventilateur d'aspiration d'air (23) de la partie chauffage aspire au moins en partie, de préférence pour partie, en particulier de préférence de 40 à 60 %, en particulier 50 % de l'air de la partie d'aspiration d'air (25) et aspire sinon de l'air de l'environnement, sachant que les pourcentages se réfèrent à la quantité totale de l'air aspiré.

10. Dispositif de chauffage selon l'une quelconque des revendications 1 à 9, **caractérisé en ce que** les deux parties A) et B) sont reliées par la tuyauterie de l'échangeur de chaleur de gaz de fumée à tubes plats (3) à l'échangeur de chaleur d'air évacué (7) et le cas échéant par la liaison de l'aspiration d'air de la partie de chauffage allant à l'échangeur de chaleur par rayonnement (5) et sont sinon des unités physiquement séparées.

11. Dispositif de chauffage selon l'une quelconque des revendications 1 à 10, de préférence pour la combustion de biomasse, en particulier de granulés composés de biomasse, comprenant ou composé de
A) une partie de brûleur comprenant
- une chambre de combustion (8), comprenant
- des conduits d'admission ou des ouvertures d'admission pour l'air primaire et l'air secondaire (6, 9),
- une grille de combustion (19) et un brûleur,
- une ouverture d'alimentation pour le combustible (20),
- une chambre de collecte des déchets de combustible et/ou un dispositif d'évacuation des déchets de combustible, de préférence un conduit, en particulier par une vis de transport sans fin pour transporter les déchets de combustible (21) reliée à la chambre de combustion (8),
- un conteneur de réserve (de granulés) (14), qui est relié à la chambre de combustion (8) par l'ouverture d'alimentation pour le combustible (20), de préférence par une vis de transport sans fin,
- une cloison de chambre de combustion creuse à l'intérieur, à double paroi (10), qui possède une ouverture supérieure, qui débouche au-dessus de la zone de combustion dans la chambre de combustion (8), de préférence au-dessus de la zone de combustion et de la zone de postcombustion et comporte une ouverture inférieure ou un raccord configuré pour recevoir l'air tertiaire introduit,
- un conduit de gaz de fumée (22), qui est disposé sur l'autre côté de la chambre de combustion (8) par rapport à la cloison de chambre de combustion creuse à l'intérieur, à double paroi (10) et dirige depuis le haut les gaz de fumée vers le bas le long de sa paroi limitrophe de la chambre de combustion,
- une zone d'échangeurs de chaleur faisant suite au conduit de gaz de fumée (22), disposée en direction d'écoulement des gaz de fumée au-delà du conduit de gaz de fumée (22), comprenant
- d'abord un échangeur de chaleur de gaz de fumée à tubes plats (3),
- ensuite un échangeur de chaleur d'air tertiaire (2) comprenant des conduits d'admission ou des ouvertures d'admission pour l'air tertiaire et des conduits de dérivation pour l'air tertiaire chauffé, qui sont reliés à la cloison de chambre de combustion creuse à l'intérieur, à double paroi (10),
- en option faisant suite à la zone d'échangeurs de chaleur, une zone avec un ventilateur d'aspiration et de tirage (1),
- une cheminée d'évacuation des gaz de fumée (11),
- un échangeur de chaleur par rayonnement (5) disposé au-dessus de la chambre de combustion (8),
- un volet de gaz de fumée (4) à l'extrémité supérieure du conduit de gaz de fumée (22), qui à l'état ouvert relie le conduit de gaz de fumée (22) à la cheminée (11),
B) une partie de chauffage comprenant
- une partie d'aspiration d'air (25), qui aspire l'air depuis le dessus de l'échangeur de chaleur par rayonnement (5) ou à travers l'échangeur de chaleur par rayonnement (5),
- un ventilateur d'aspiration d'air (23), qui aspire au moins en partie, de préférence en partie, en particulier de préférence à 40 jusqu'à 60 %, en particulier 50 % l'air de la partie d'aspiration d'air (25) et aspire sinon l'air de l'environnement, sachant que les pourcentages se réfèrent à la quantité totale d'air aspiré,
- un échangeur de chaleur d'air évacué (7) avec le même caloporteur que l'échangeur de chaleur de gaz de fumée à tubes plats (3), de préférence de l'huile thermique,
- une ouverture de sortie pour l'air chauffé, sachant que l'échangeur de chaleur de gaz de fumée à tubes plats (3) forme un circuit d'échangeurs de chaleur avec
l'échangeur de chaleur d'air évacué (7) et les deux parties A) et B) sont reliées par la tuyauterie de l'échangeur de chaleur de gaz de fumée à tubes plats (3) à l'échangeur de chaleur d'air évacué (7) et le cas échéant par la liaison de la partie d'aspiration d'air (25) de la partie de chauffage allant à l'échangeur de chaleur par rayonnement (5) et sont sinon en option des unités physiquement séparées.

12. Partie de brûleur, de préférence ou un dispositif de chauffage, comprenant
- une chambre de combustion (8) comprenant
- des conduits d'admission pu des ouvertures d'admission pour l'air primaire et l'air secondaire (6, 9),
- une grille de combustion (19) et un brûleur,
- une ouverture d'alimentation pour le combustible (20),
- une chambre de collecte des déchets de combustible et/ou un dispositif d'évacuation des déchets de combustible,
- un conteneur de réserve (de granulés) (14), qui est relié à la chambre de combustion (8) par l'ouverture d'alimentation pour le combustible (20), de préférence par une vis de transport sans fin,
- une cloison de chambre de combustion creuse à l'intérieur, à double paroi (10), qui possède une ouverture supérieure, qui débouche au-dessus de la zone de combustion, de préférence au-dessus de la zone de combustion et de la zone de postcombustion, dans la chambre de combustion (8) et une ouverture inférieure, configurée pour recevoir l'air tertiaire introduit,
- un conduit de gaz de fumée (22), qui est disposé sur l'autre côté de la chambre de combustion (8) par rapport à la cloison de chambre de combustion creuse à l'intérieur, à double paroi (10) et dirige depuis le haut les gaz de fumée vers le bas le long de sa paroi limitrophe de la chambre de combustion,
- une zone d'échangeurs de chaleur faisant suite au conduit de gaz de fumée (22), disposée en direction d'écoulement des gaz de fumée au-delà du conduit de gaz de fumée (22), comprenant
- d'abord un échangeur de chaleur de gaz de fumée à tubes plats (3), de préférence avec de l'huile thermique comme caloporteur,
- ensuite un échangeur de chaleur d'air tertiaire (2) comprenant des conduits de dérivation ou des ouvertures d'admission pour l'air tertiaire et des conduits d'évacuation pour l'air tertiaire chauffé, qui sont reliés à la cloison de chambre de combustion creuse à l'intérieur, à double paroi (10),
- en option une zone avec un ventilateur d'aspiration et de tirage (1) faisant suite à la zone d'échangeurs de chaleur,
- une cheminée d'évacuation des gaz de fumée (11),
- un échangeur de chaleur par rayonnement (5) disposé au-dessus de la chambre de combustion (8),
- un volet de gaz de fumée (4) à l'extrémité supérieure du conduit de gaz de fumée (22), qui relie à l'état ouvert le conduit de gaz de fumée (22) à la cheminée (11).

13. Procédé destiné à augmenter le rendement d'un dispositif de chauffage par
- l'alimentation d'une combustion dans une chambre de combustion (8), de préférence comme cela est décrit dans les revendications précédentes, en acheminant de l'air primaire à travers la zone de combustion et par apport d'air secondaire à l'extrémité supérieure de la zone de combustion,
- la conduction des gaz de fumée d'abord par un échangeur de chaleur des gaz de fumée à tubes plats (3) et ensuite par un échangeur de chaleur d'air tertiaire (2),
- la conduction de l'air tertiaire ainsi chauffé dans une cloison de chambre de combustion creuse à l'intérieur, à double paroi (10) pour un chauffage ultérieur,
- l'introduction de l'air tertiaire chauffé de la cloison de chambre de combustion creuse à l'intérieur, à double paroi (10) dans la chambre de combustion (8) au-dessus de la zone de combustion, de préférence au-dessus de la zone de combustion et de la zone de postcombustion et mélange avec les gaz de combustion,
- transmission de la chaleur à au moins une partie de l'air à réchauffer par un échangeur de chaleur (5) disposé au-dessus de la chambre de combustion (8),
- transmission d'une chaleur ultérieure à l'air à réchauffer par un échangeur de chaleur d'air évacué (7) au moyen d'un caloporteur chauffé dans l'échangeur de chaleur de gaz de fumée à tubes plats (3), en particulier de l'huile thermique.

14. Utilisation du dispositif de chauffage selon l'une quelconque des revendications 1 à 11 pour le chauffage de zones à chauffer ou du procédé selon la revendication 13 pour augmenter l'efficacité des dispositifs de chauffage.

15. Utilisation de la partie de brûleur selon la revendication 12 pour la combustion de combustibles, de préférence à partir de biomasse, en particulier de granulés de bois ou pour le chauffage de zones à chauffer, en option conjointement à une partie de chauffage, en particulier à une partie de chauffage comme cela est décrit dans les revendications 1 à 11.
